# EUROPEAN PATENT SPECIFICATION

(11) **EP 3 489 046 B1**
(45) Date of publication and mention of the grant of the patent: **15.07.2020**
(21) Application number: 17203723.6
(22) Date of filing: 27.11.2017
(51) Int. Cl.: B60G 3/20, B60G 15/07

(54) **A QUADRILATERAL-TYPE SUSPENSION FOR A STEERABLE WHEEL OF A MOTOR-VEHICLE**
QUADRILATERALE AUFHÄNGUNG EINES LENKBAREN RADS EINES KRAFTFAHRZEUGS
SUSPENSION DE TYPE QUADRILATÉRAL POUR UNE ROUE ORIENTABLE D'UN VÉHICULE AUTOMOBILE

(43) Date of publication of application: 29.05.2019
(73) Proprietor: FCA Italy S.p.A., 10135 Torino (IT)
(72) Inventor: DUSINI, Luca, I-10135 Torino (IT); TAVONI, Luca, I-10135 Torino (IT); BATTAGLIA, Gaetano, I-10135 Torino (IT); GIACOMEL, Filippo, I-10135 Torino (IT)
(74) Representative: Notaro, Giancarlo

(56) References cited:
- WO-A1-2015/104942
- DE-A1- 19 751 754
- US-A- 2 169 969
- US-A- 3 446 513
- US-A1- 2003 006 573
- US-A1- 2009 218 783
- US-B1- 6 471 224

## Description

### Field of the invention

The field of the present invention is that of quadrilateral-type suspensions for steerable wheels of motor-vehicles.

In particular, the invention relates to motor-vehicle front suspensions for steerable wheels of the known type comprising:
- a wheel support,
- an upper oscillating arm, having one end articulated to the wheel support by means of a first joint and an opposite end articulated to the motor-vehicle structure by means of at least one second joint,
- a lower oscillating arm, having one end articulated to the wheel support by means of a first joint and an opposite end articulated to the motor-vehicle structure by means of at least one second joint,
- a spring-shock absorber unit operatively interposed between said suspension and the structure of the motor-vehicle, and
- an anti-roll bar mounted on the structure of the motor-vehicle along a transverse axis with respect to the longitudinal direction of the motor-vehicle and having an end arm operatively connected to said suspension.

In quadrilateral-type suspensions of the above-mentioned type, each of the aforesaid upper and lower oscillating arms can be in the form of a single oscillating arm (e.g. having a triangular configuration, with a single joint for connection to the support, and two spaced-apart and coaxial joints for connection to the motor-vehicle structure), or it can be defined by two independent oscillating rods, each connected in an articulated manner at one end to the wheel support and at the opposite end to the motor-vehicle structure. In the case of a single upper oscillating arm and a single lower oscillating arm, the axis passing through the two joints connecting the arms to the wheel support defines the steering axis of the wheel. In the case in which, for example, a single lower arm is provided, while the upper arm consists of two independent oscillating rods, the steering axis of the wheel is a so-called "semi-virtual" axis, passing through the point connecting the lower arm to the support and through an intermediate point between the two points connecting the upper rods to the wheel support, the position of which changes during the movement of the suspension.

### Prior art

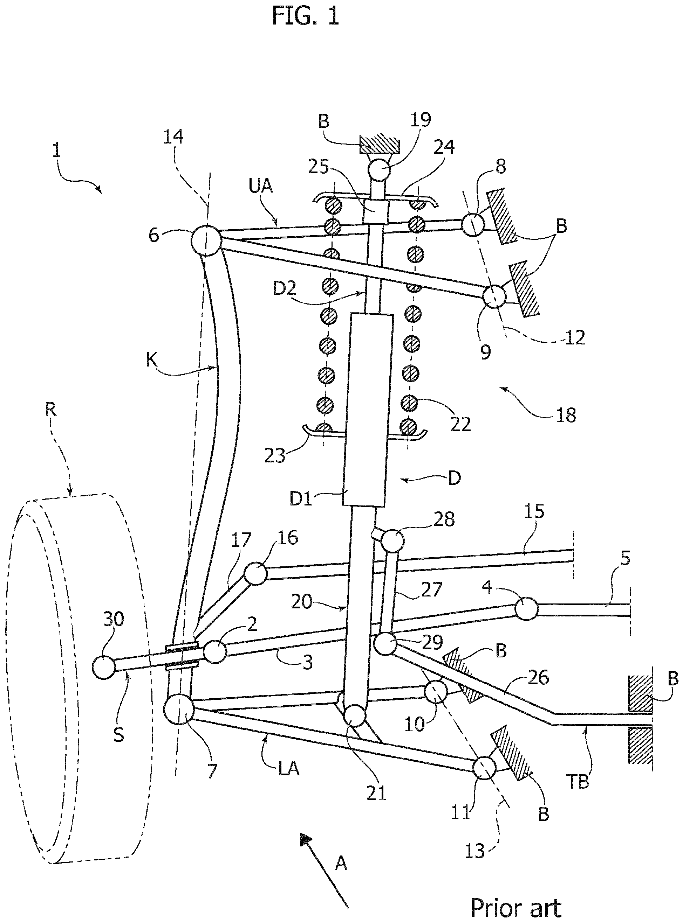

Figure 1 of the attached drawings illustrates, by way of example, a quadrilateral-type suspension for a motor-vehicle steerable wheel according to the prior art.

Figure 1 is a three-dimensional view, which shows a basic diagram of the suspension.

In this figure, as well as in all of the figures of the attached drawings, the various elements of the suspension are schematically illustrated and the suspension joints are represented by spheres, being obvious to those skilled in the art that each of these elements and joints can have different shapes and configurations, of any type known per se. Specifically, the joints can be spherical joints of any known type or even elastic bushings defining a main oscillation axis and, in any case, capable of allowing an inclination of the bushing axis relative to the main oscillation axis. These constructive details have not been illustrated simply to make the drawings more readily and easily understood.

According to the prior art, the wheel support K rotatably supports a wheel pin S of a wheel R, with the associated wheel hub (not illustrated). Still according to the prior art, the wheel pin S is connected by means of a homocinetic joint 2 to a semi-axle 3 connected, by means of an additional homocinetic joint 4, to an outlet shaft 5 of a front differential unit (not shown) of the motor-vehicle.

Although the example in Figure 1 refers to the case of a front steerable and drive wheel of a motor-vehicle, this discussion applies in general to the front steerable wheels of a motor-vehicle, including nondriven front steerable wheels.

Still with reference to the known solution illustrated in Figure 1, the wheel support K is connected to the body B of the motor-vehicle (of which some parts are only illustrated schematically in the drawing) by means of an upper oscillating arm UA (upper arm) and a lower oscillating arm LA (lower arm). In the example shown in Figure 1, each of said upper and lower arms UA, LA is in the form of a single triangular arm having an outer end connected to the wheel support by means of a spherical joint (indicated by 6 for the upper arm UA and by 7 for the lower arm LA) and having an inner end articulated to the body B of the motor-vehicle by means of two spaced-apart articulated joints (indicated by 8 and 9 for the upper arm UA and by 10 and 11 for the lower arm LA). The two joints 8, 9 and the two joints 10, 11 define, respectively, articulation axes 12, 13 of the upper and lower arms UA, LA at the body B. The joints 6, 7, for connecting the upper and lower arms UA and LA, to the wheel support K define the steering axis 14 of the support K and of the wheel R, which is exactly the axis passing through these joints.

As indicated above, according to the prior art, each of the upper and lower arms UA and LA can be replaced by two independent articulated rods. For example, in the case in which the lower arm LA is formed of a single arm as in the example shown in Figure 1, and in which the upper UA arm instead consists of two independent rods articulated to the wheel support K at two different points, the steering axis is a semi-virtual axis passing through the joint 7 for connecting the lower arm LA to the wheel support and through an intermediate point between the two joints connecting the two upper oscillating rods to the support.

Still according to the prior art illustrated in Figure 1, a steering beam 15 driven by a steering device (not shown) is connected by means of a joint 16 to an arm 17 rigidly connected to the wheel support K, in such a way that a movement of the steering beam 15 causes a rotation of the support K, and with it, the wheel R, about the steering axis 14.

Still according to the prior art illustrated in Figure 1, a spring-shock absorber unit 18 is interposed between the suspension and the body B. The spring-shock absorber unit 18 comprises a shock absorber cylinder D, including a cylindrical body D1 within which a stem D2 is slidably mounted. In the example illustrated in Figure 1, the stem D2 has its end external to the cylinder D1 connected to the body B by a joint 19, while the cylindrical body D1 is connected by means of a rigid connecting element 20 to the lower oscillating arm LA by means of a joint 21. In the simplified diagram of Figure 1, the joint 21 is carried by a cross-member joining two rods, which represent, in a simplified manner, the structure of a lower arm with a triangular configuration. It is evident that the configuration of the lower arm LA is produced in a number of ways and that there are several ways in which, in the known solutions, the shock absorber cylinder D can be connected to the lower arm.

The spring-shock absorber unit 18 of the known suspension illustrated in Figure 1 also comprises a helical spring 22, the lower end of which is supported against a plate 23 rigidly connected to the cylindrical body D1 of the shock absorber cylinder D. The upper end of the helical spring 22 reacts instead against a plate 24 rigidly connected to the stem D2 of the shock absorber cylinder D. A stop member 25 of elastomeric material is also associated with the stem D2 that, when the stem D2 has reentered within the cylindrical body D1, engages against the upper end of the cylindrical body D1.

Still according to the prior art illustrated in Figure 1, the suspension comprises an anti-roll bar TB that has a main portion rotatably mounted with respect to the body B of the motor-vehicle about a transverse axis with respect to the longitudinal direction A of the motor-vehicle. Figure 1 shows only the left end portion of the anti-roll bar TB carrying an end arm 26 which, in the example of Figure 1, is connected to the spring-shock absorber unit 18 (specifically to the element 20) by means of a connecting rod 27 having articulated ends 28, 29.

Figure 2 shows a further example of a known quadrilateral-type suspension, which differs from the example of Figure 1, only in that in the case of Figure 2, the end arm 26 of the anti-roll bar TB is connected by a connecting rod 27 to the lower oscillating arm LA of the suspension.

Figure 3 illustrates a further example of a known suspension, which differs from that of Figures 1 and 2 in that, in the case of the suspension of Figure 3, the end arm 26 of the anti-roll bar TB is connected by means of the connecting rod 27 to wheel support K.

As can be seen from the preceding description, a common characteristic of known quadrilateral-type suspensions lies in the fact that the spring-shock absorber unit 18 is connected to the lower oscillating arm LA. The connection of the spring-shock absorber unit to the lower arm LA generates high loads on the joints 10, 11 for connecting the lower arm LA to the body B due to the forces generated by the stop element 25 when engaging with the cylindrical body D1, as well as the spring 22 and the anti-roll bar TB during vertical movements of the center of the wheel R (point 30) during motor-vehicle journeys on uneven and/or curved paths.

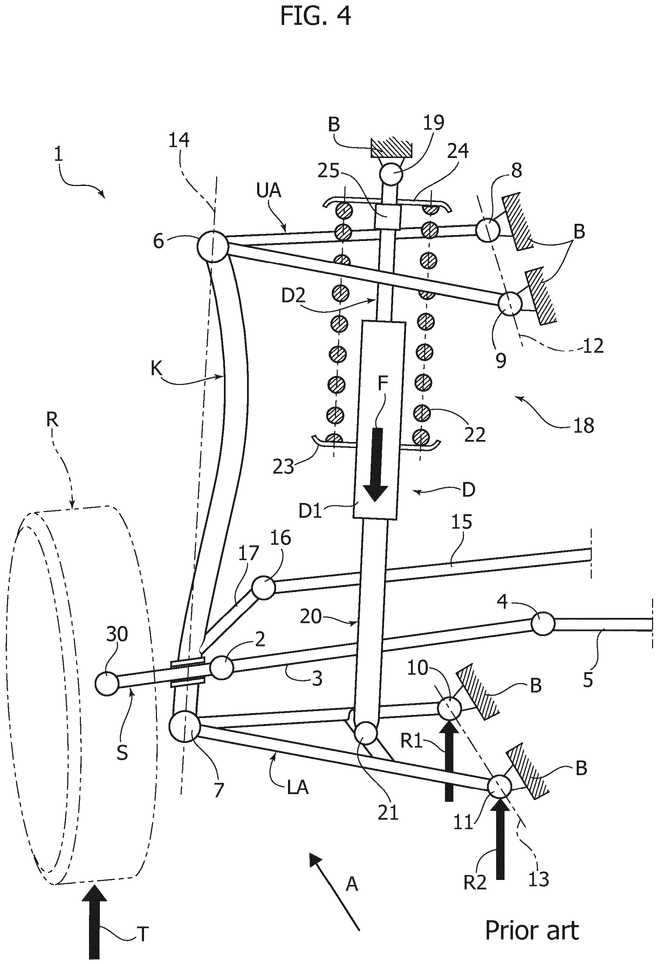

Referring to Figure 4, references R1, R2 indicate the forces to which the joints 10, 11 are subjected, following the force F transmitted by the spring-shock absorber unit 18 and following the ground reaction force T on the wheel R. These high loads involve an appropriate dimensioning of the lower arm LA and of the component (typically a cross-member rigidly connected to the motor-vehicle body) carrying the joints 10, 11, resulting in an increase in the weight and manufacturing cost of the suspension.

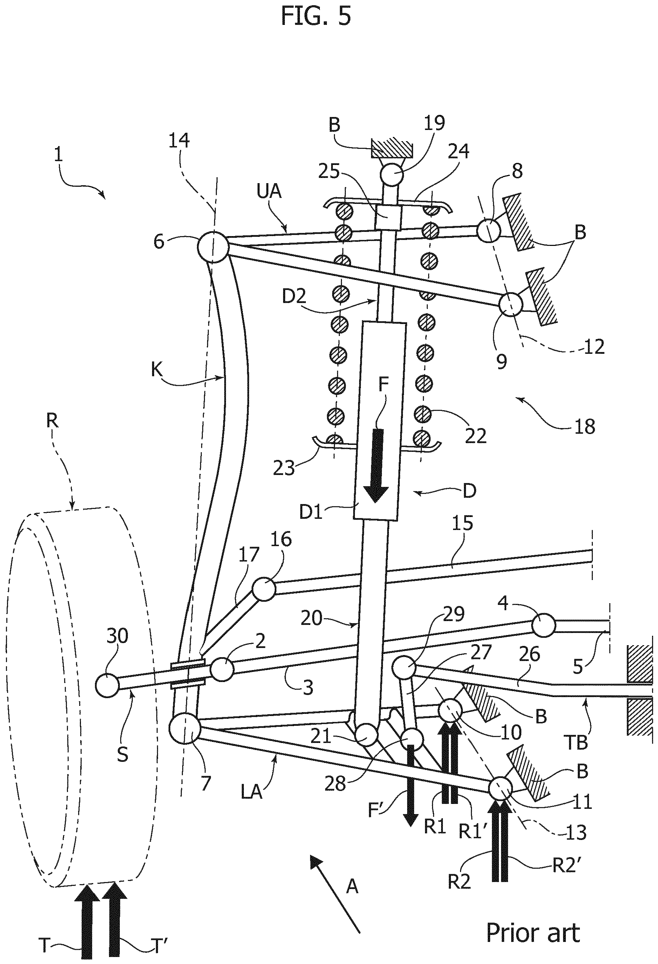

In the case in which the anti-roll bar TB is connected to the lower arm LA (see Figure 5), additional loads R1' and R2' are generated at the joints 10, 11 as a result of the additional loads F' and T'.

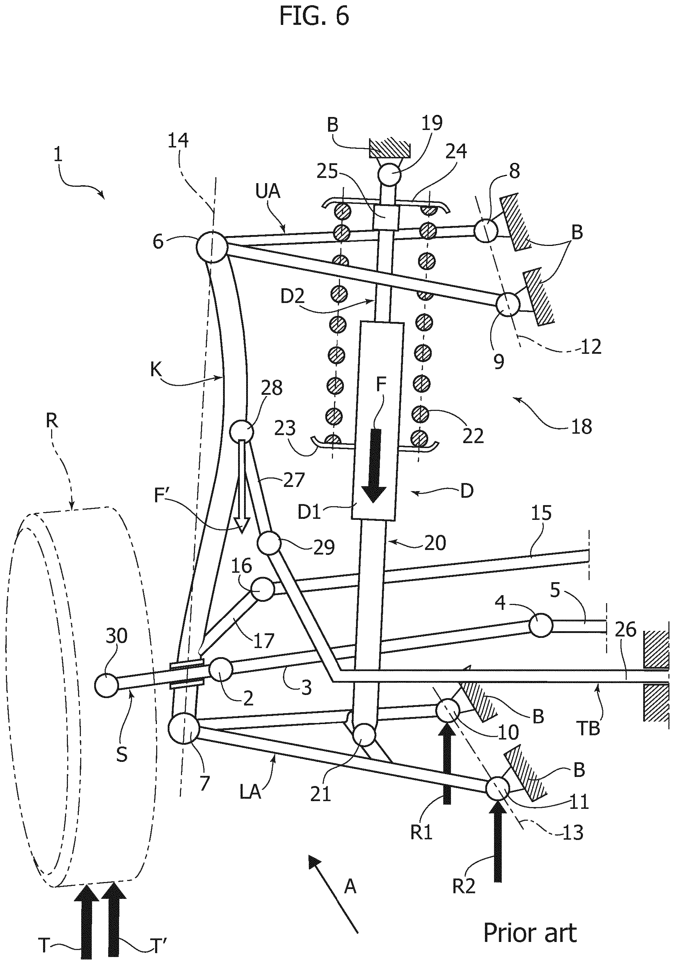

In the case in which the anti-roll bar is connected to the wheel support (Figure 6), it is connected at the steering axis 14, to avoid the generation of torques about the steering axis, which generate a poor "feeling" for the driver during turning maneuvers. This connection is often difficult. In any case, the loads generated by the stop element 25 and the spring 22 affect the lower oscillating arm LA.

A suspension according to the preamble of claim 1 is known from WO 2015/104942. Similar suspensions are known from DE 197 51 754 A1, US 6 471 224 B1, US 2003/006573 A1, US 2 169 969 A, US 3 446 513 A and US 2009/218783 A1.

### Object of the invention

The object of the present invention is to provide a quadrilateral-type suspension that it is able to overcome all the above-mentioned drawbacks of the known solutions.

In particular, an object of the invention is to provide a quadrilateral-type suspension, for a steerable wheel, in which the loads applied to the joints connecting the lower oscillating arm to the motor-vehicle structure are considerably reduced.

A further object of the invention is to improve the efficiency of the spring-shock absorber unit, interpreted as an increase, up to a value close to 1, in the ratio between the vertical movement of the wheel center and the corresponding movement of the point connecting the spring-shock absorber unit to the suspension.

A further object of the invention is to enable an industrially simple transformation of a suspension originally conceived as a quadrilateral-type suspension into a simpler and more economical suspension, in particular a McPherson-type suspension.

### Summary of the invention

In view of achieving the aforesaid objects, the invention relates to a quadrilateral-type suspension for a steerable wheel of a motor-vehicle having the features of claim 1.

In a first embodiment, the end arm of the anti-roll bar is operatively connected to the suspension by means of connection to said wheel support. In this case, preferably said end arm of the anti-roll bar is connected to the wheel support at a connecting point lying substantially on the steering axis of the wheel.

According to an additional characteristic, the aforesaid end arm of the anti-roll bar is connected to the wheel support by means of an articulated rod.

In a second embodiment, the end arm of the anti-roll bar is operatively connected to the suspension by means of connection to said spring-shock absorber unit. Also in this case, the end arm of the anti-roll bar is connected to the spring-shock absorber unit by means of an articulated rod.

In both embodiments described above, preferably the aforesaid articulated rod for connecting the end arm of the anti-roll bar extends in a direction as vertical as possible and, in any case, forming an angle of less than 20° with the vertical.

The connection of the spring-shock absorber unit to the wheel support can be produced in several ways. In a first solution, this connection is created by means of an articulated joint, for example a spherical joint. In the case of this solution, the spring-shock absorber unit is free to pivot about this spherical joint with respect to the wheel support, which is feasible in cases where there is no risk of interference between these components.

In a second solution, the connection is created by means of an elastic member (generally an elastic bushing), configured in such a way as to allow reduced relative movements between the wheel support and the spring-shock absorber unit, regulated by the rigidity of the element itself.

The additional connecting element of the anti-rotation device can be an articulated rod, or an auxiliary bushing carried by the wheel support, which is crossed by an element rigidly connected to the spring-shock absorber unit.

Thanks to all of the characteristics indicated above, the invention provides a quadrilateral-type suspension in which the joints connecting the lower oscillating arm to the motor-vehicle structure are subjected - during travel of the motor-vehicle also on uneven ground and/or in turns, to dramatically reduced loads compared to those which occur in quadrilateral-type suspensions of the known type.

A further advantage of the invention lies in the fact that the efficiency of the shock absorber unit is greatly improved, with the ratio between the vertical movement of the wheel center and the corresponding movement of the point connecting the spring-shock absorber unit to the wheel support being higher and only slightly less than 1.

An additional advantage of the suspension according to the invention lies in that of making the conversion from the production of a quadrilateral-type suspension of the above-mentioned type to the production of a more economical suspension of the McPherson-type industrially simple, as will be apparent from the following description.

### Detailed description of the embodiments of the invention

Further characteristics and advantages of the invention will become apparent from the description that follows with reference to the attached drawings, provided purely by way of non-limiting example, wherein:

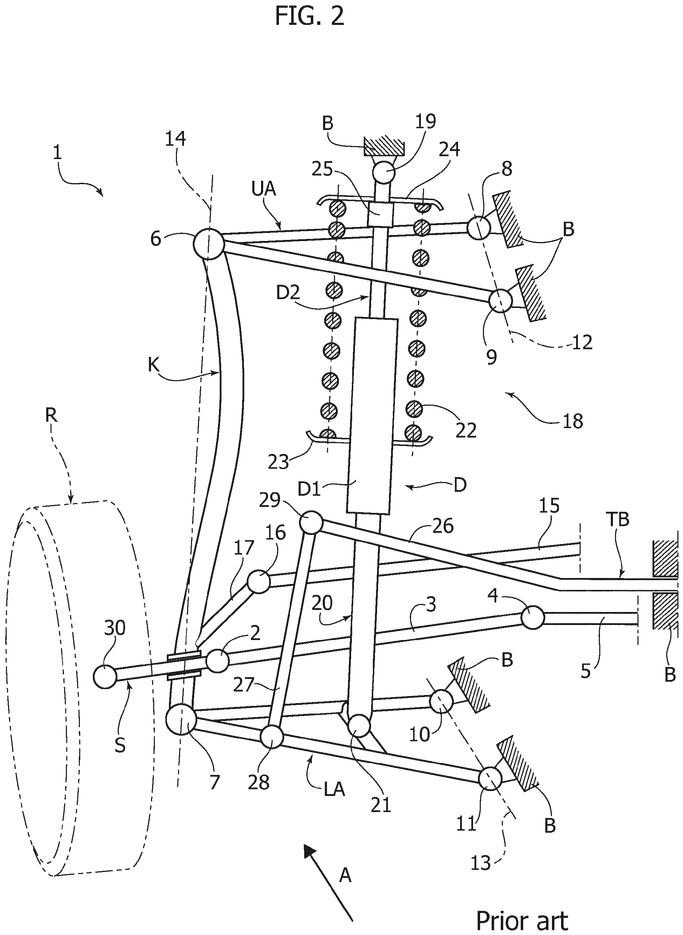

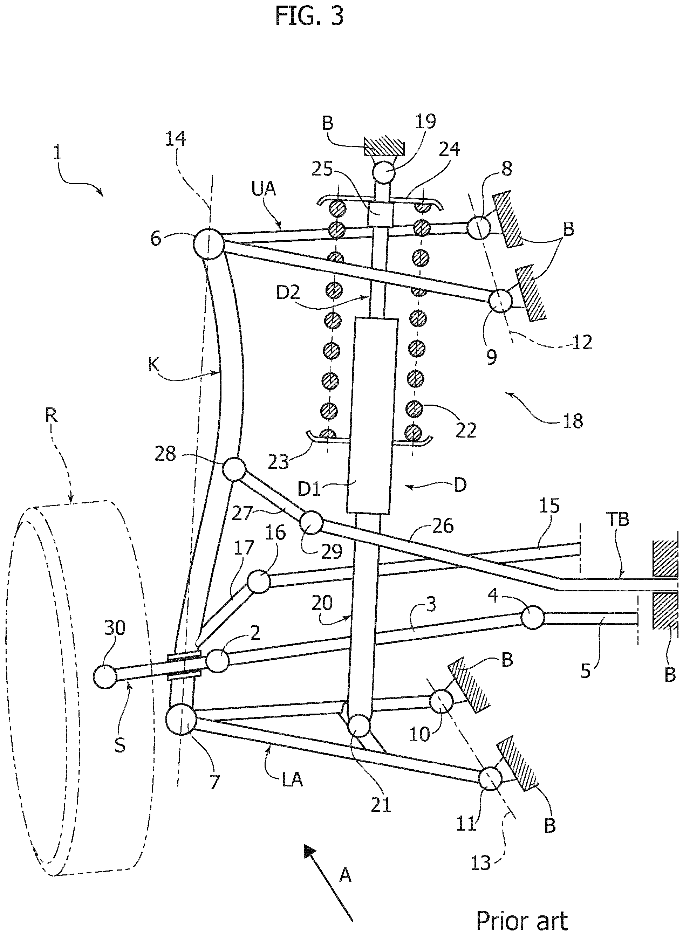

- Figures 1-6, are diagrams of quadrilateral-type suspensions according to the prior art, already described above,

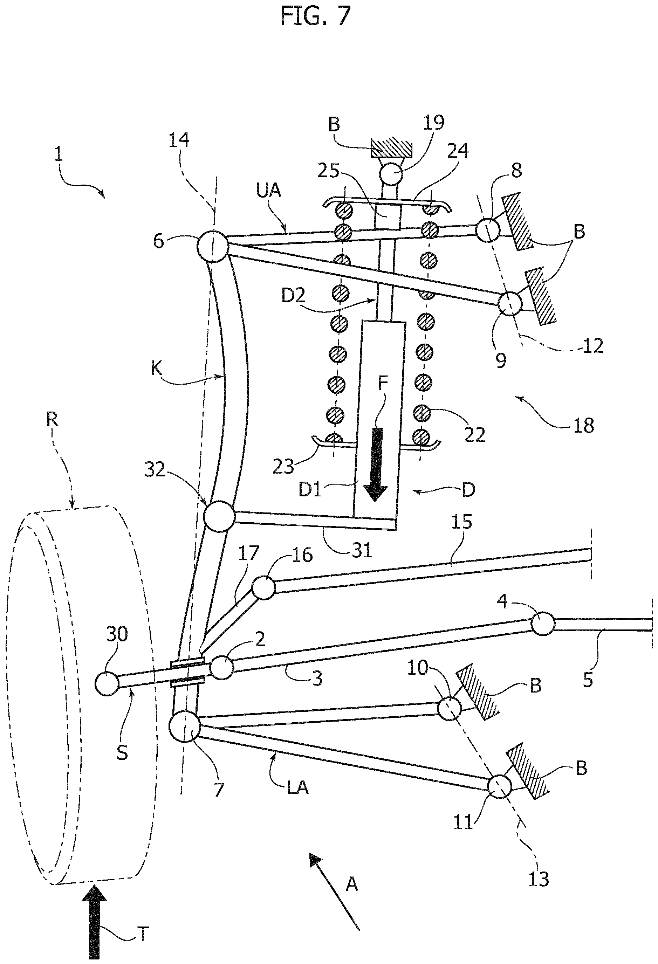

- Figure 7 is a diagram of the suspension according to the invention illustrating the basic principles of the present invention,

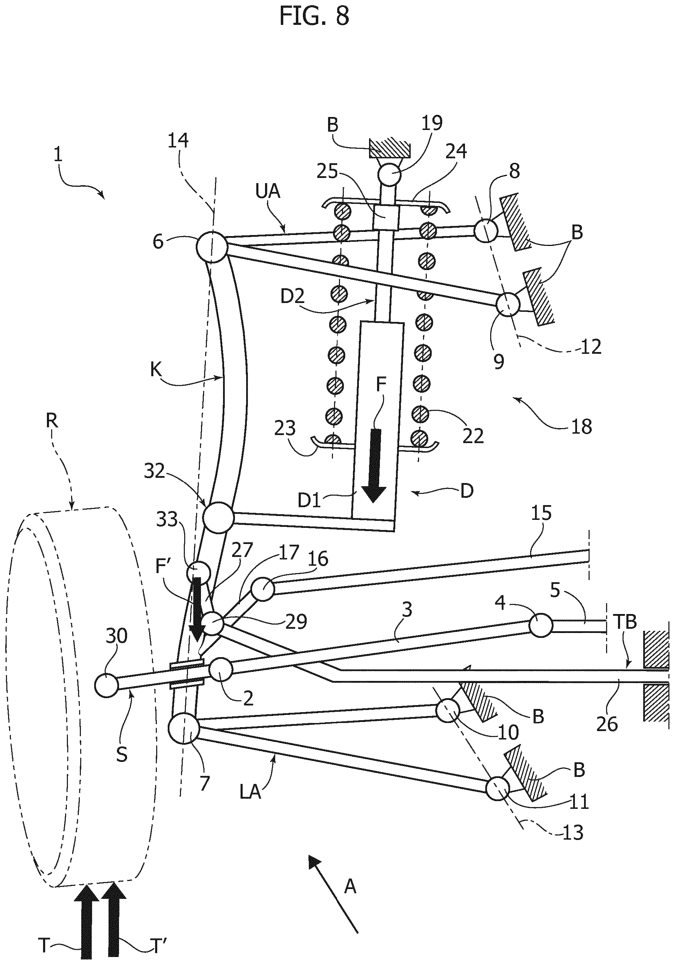

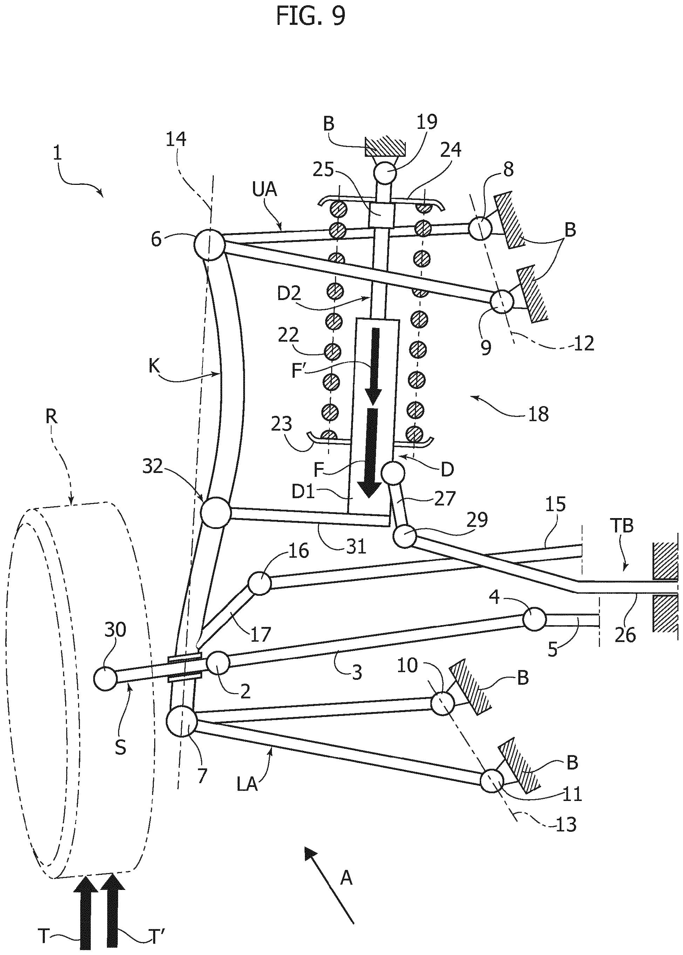

- Figures 8 and 9 illustrate two embodiments of the suspension of Figure 7, which differ in the different arrangement of the anti-roll bar,

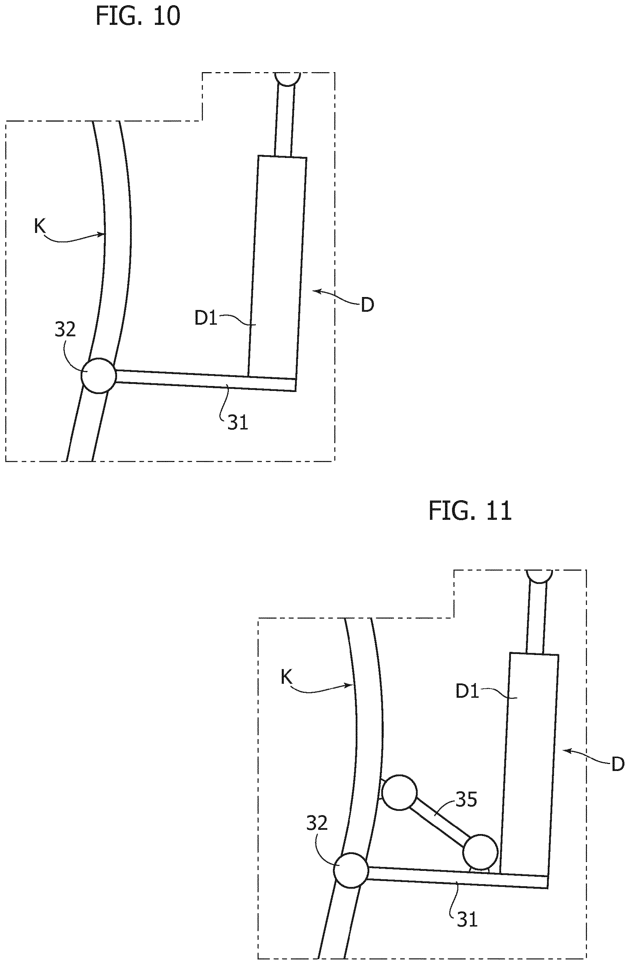

- Figures 10-13 illustrate a detail of the suspension according to the invention with reference to various solutions for connecting the spring-shock absorber unit to the wheel support, and

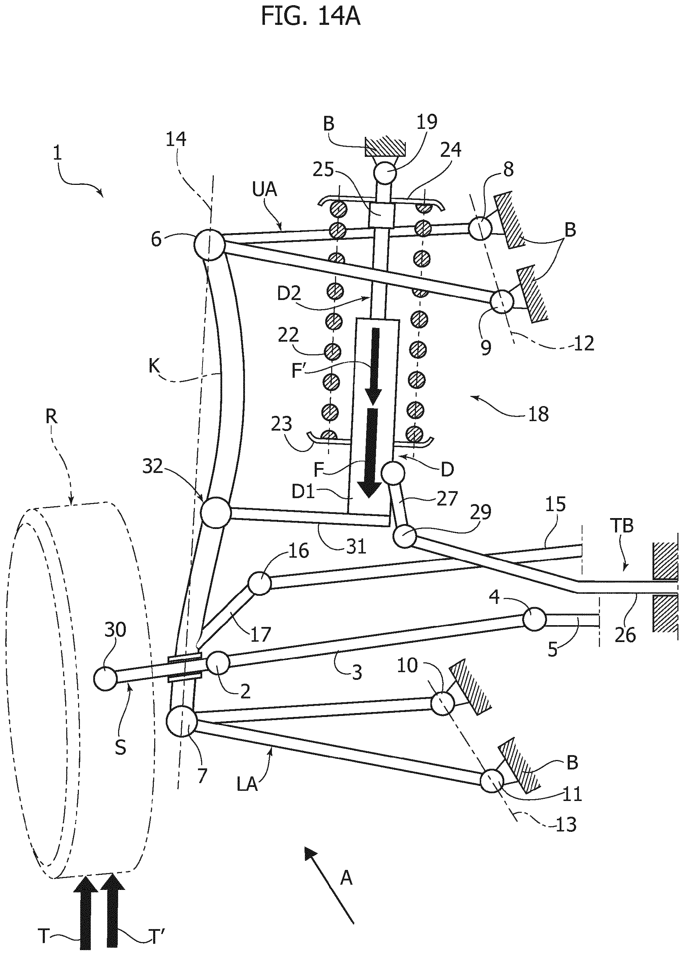

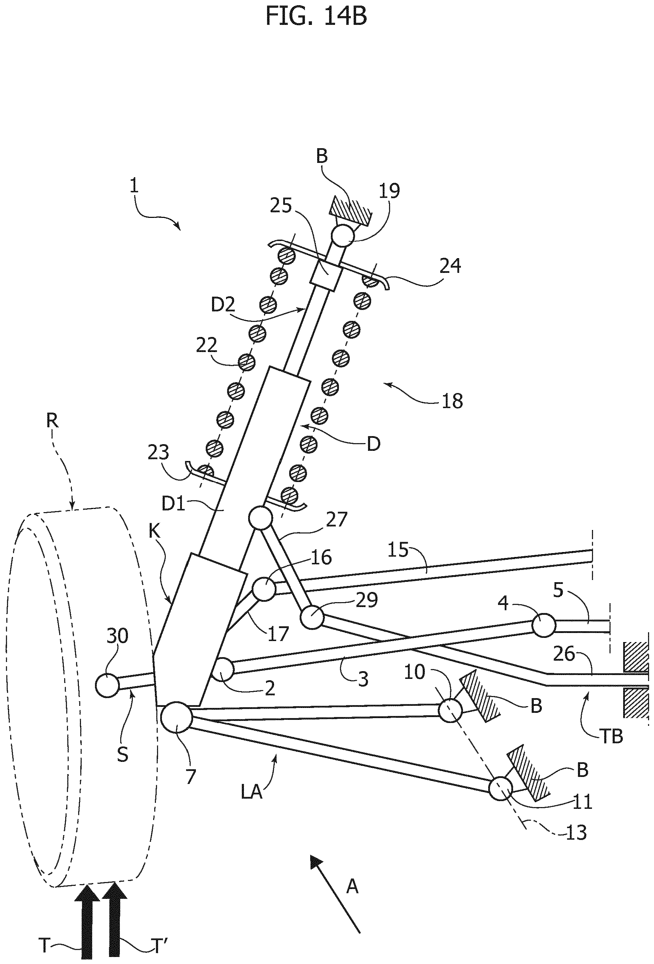

- Figures 14A, 14B show a diagram of the suspension according to the invention and a diagram of a simplified suspension of the McPherson-type obtainable by means of a transformation of the suspension according to the invention, and

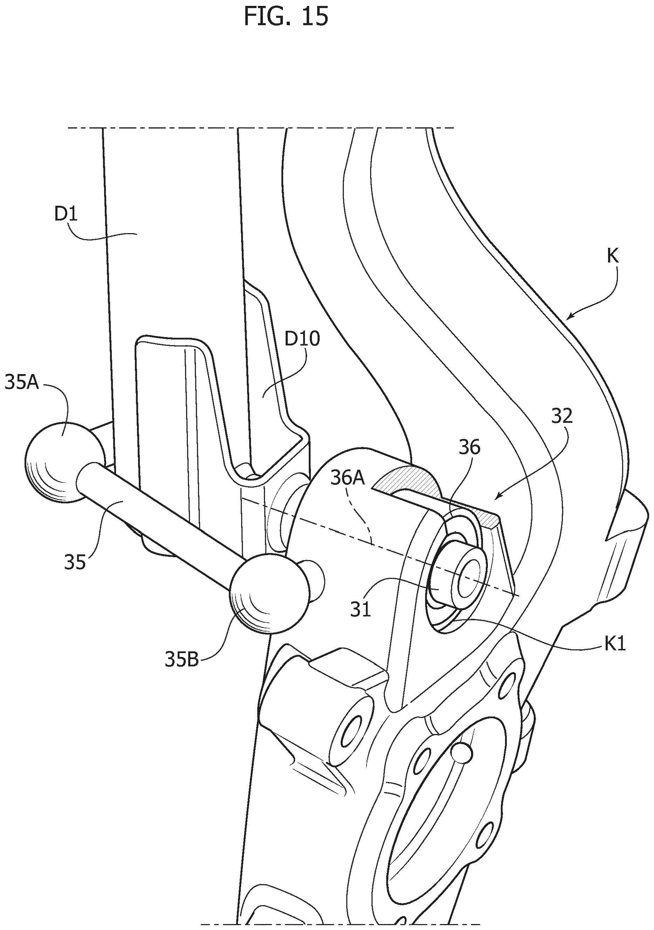

- Figures 15-17 show the detail of the connection between the spring-shock absorber unit and the wheel support, in three different embodiments of the invention.

The known quadrilateral-type suspensions illustrated in Figures 1-6 have already been described above.

In Figures 7-14, the parts common to those of Figures 1-6 are indicated by the same reference numbers.

Figure 7 shows the basic principle of the suspension according to the present invention. In Figure 7, neither the anti-roll bar, nor the spring of the spring-shock absorber unit, is illustrated. The anti-roll bar, instead, is illustrated in Figures 8 and 9, with reference to two different embodiments of the suspension according to the invention, which differ from each other in the arrangement of the anti-roll bar. For simplicity, the spring of the spring-shock absorber unit has been omitted in Figures 7-14, the arrangement of this spring on the unit 18 being entirely similar to that illustrated in Figure 1.

Returning to Figure 7, the suspension 1 illustrated therein is a quadrilateral-type suspension having the same base components as described with reference to the known solutions illustrated in Figures 1-6. The main difference of the suspension according to the invention with respect to the known solutions lies in the fact that, in this case, the spring-shock absorber unit 18 is connected to the suspension by means of a connection to the wheel support K. According to the solution illustrated in Figure 7, the cylindrical body D1 of the shock absorber cylinder D carries below it a rigid connecting element 31 that is connected at point 32 to the wheel support K. The connecting point 32 is substantially located on the steering axis 14. Thanks to this arrangement, the forces generated by the spring of the shock absorber unit and the stop element 25 (in the configuration of the minimum length of the spring-shock absorber unit) do not generate torques that rotate the wheel support so that there are no repercussions on the steering.

In the embodiment illustrated in Figure 8, the anti-roll bar TB is connected to the wheel support K at a connecting point 33, also lying substantially on the steering axis 14 or, in any case, adjacent to it, to avoid any negative consequences for the steering feeling; and with the connecting rod 27 arranged as vertically as possible, for the same reason. In particular, the connecting rod 27 preferably forms an angle of less than 20° with the vertical.

In the embodiment illustrated in Figure 9, however, the end arm of the anti-roll bar is connected by means of the connecting rod 27 to the cylindrical body D1 of the shock absorber cylinder D. In this case, however, there is an anti-rotation device (described in detail below) that limits the relative rotations between the wheel support K and the cylindrical body D1 of the shock absorber cylinder D.

The connection of the spring-shock absorber unit 18 to the wheel support R can be provided in several ways. The diagrams in Figures 7-9, as well as Figure 10, refer to the case in which a rigid connecting element 31, rigidly connected to the body D1 of the shock absorber cylinder D, is connected in an articulated manner to the wheel support K by means of an articulated joint 32 of any type, for example, in the form of a spherical joint or in the form of an elastic bushing, for example, having its axis directed substantially parallel to the longitudinal direction of the motor-vehicle. In the case of this solution, the spring-shock absorber unit 28 is free to rotate relative to the wheel support K. It is therefore necessary, in this case, to verify that these movements can occur without interference between these components.

If the aforesaid movements are limited, it is possible to envisage, as shown in Figure 11, that the connection is associated with an anti-rotation device to prevent or limit the relative rotation between the spring-shock absorber unit 28 and the wheel support K. This anti-rotation device is, in principle, constituted by an additional element for connecting the wheel support K and the spring-shock absorber unit 28. Figure 11 shows an anti-rotation device formed of a connecting rod 35 having opposite ends articulated to the wheel support K and to the rigid element 31.

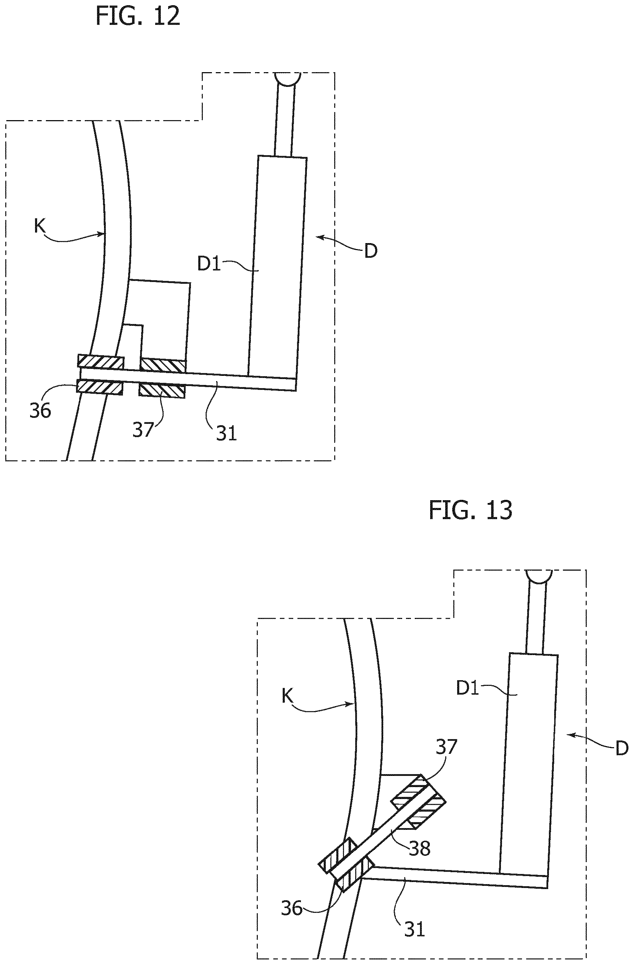

Figure 12 shows a variant in which there is a first connection to the wheel support K, by means of a first elastic bushing 36, having a direct axis transverse to the longitudinal direction of the motor-vehicle and engaged by the rigid element 31 connected to the spring-shock absorber unit. The element 31 is also engaged through a second elastic bushing 37 carried by an element integral with the wheel support K. The bushing 37 is spaced apart from the bushing 36 and coaxially thereto, so as to limit movements of the element 31 with respect to the support K.

Figure 13 shows a variant of Figure 12, in which the bushings 36 and 37 are engaged by an auxiliary pin 38 rigidly connected by means of the element 31 to the shock absorber body D1.

Figures 14A and 14B show that the suspension according to the invention can also be easily converted into a simpler and cheaper suspension, of the McPherson-type, wherein the wheel support is reduced in size and wherein the upper oscillating arm is eliminated. In common with the suspension according to the invention, the simplified suspension includes the lower oscillating arm and the anti-roll bar with its end arm connected by means of the connecting rod to the shock absorber cylinder body, which is connected to the wheel support. It is also relatively easy to carry out the inverse transformation.

Figure 15 shows a partially sectioned perspective view of the detail of the connection between the spring-shock absorber unit and the wheel support, in a concrete embodiment.

In this example, a metal bracket D10 is welded to the cylindrical body D1 of the cylinder-shock absorber unit D supporting an overhanging rigid pin 31, which is received within an elastic bushing 36, of elastomeric material. The elastic bushing 36 is carried in a seat K1 of the wheel support K, with its axis 36A parallel to the wheel axis. The elastic bushing 36 allows rotation of the spring-shock absorber unit with respect to the wheel support K about its axis 36A, as well as rotations corresponding to an inclination of the axis of the pin 31 with respect to the axis 36A. In this example, these rotations are countered and/or limited by an anti-rotation device formed of an articulated rod 35, having its opposite ends connected by means of articulated joints 35A, 35B to the body D1 and to the support K. The joints 35A, 35B are schematically illustrated, being achievable in any known manner, by means of spherical joints or elastic bushings. In the illustrated example, the rod 35 is in a longitudinally advanced or retracted position with respect to the pin 31, and substantially at the same height as the pin 31.

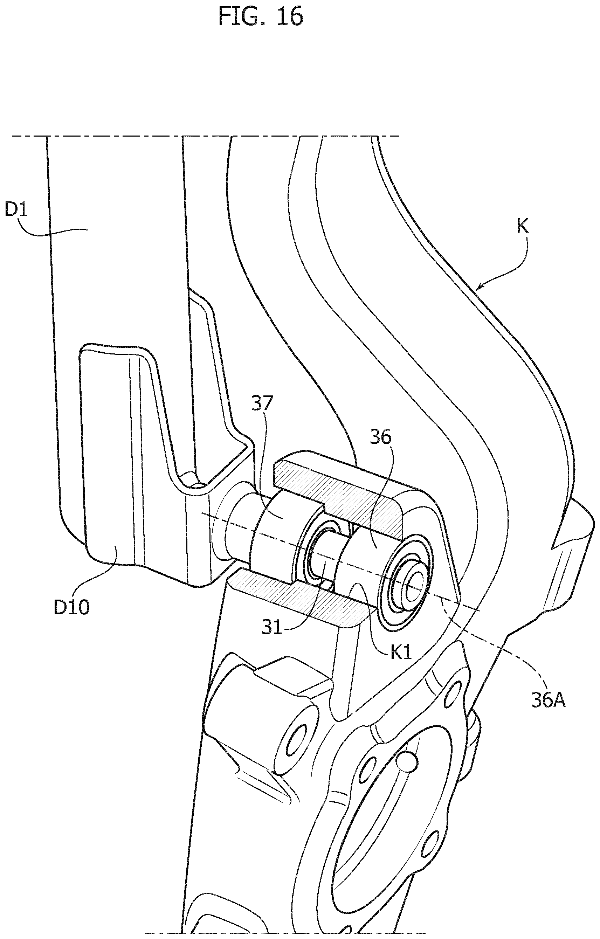

Figure 16 shows a partially sectioned perspective view of the detail of the connection between the spring-shock absorber unit and the wheel support in another concrete embodiment, corresponding to the diagram of Figure 12.

In this example, the wheel support K has a seat K1, which receives the two elastic bushings 36, 37 arranged aligned on the same axis 36A, parallel to the wheel axis and spaced apart from each other. The pin 31 is received through both bushings 36, 37, which therefore allow limited relative oscillations between the spring-shock absorber unit and the wheel support.

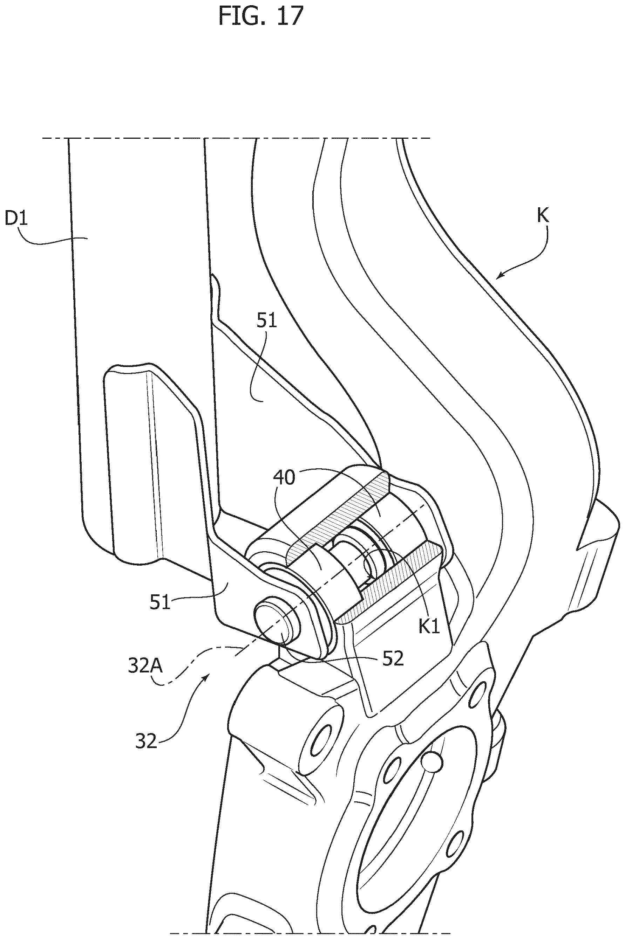

Figure 17 shows a partially sectioned perspective view of the detail of the connection between the spring-shock absorber unit and the wheel support in another concrete embodiment, corresponding to the diagram of Figure 13.

In this example, the articulated joint 32 comprises two elastic bushings 40, which are received within a seat K1 of the support K. The bushings 40 are aligned and spaced apart from each other along the same axis 32A, substantially parallel to the longitudinal direction of the motor-vehicle. The bushings 40 are engaged by a pin 52 carried by two metal flanges 51 welded to the cylindrical body D1 of the shock absorber cylinder. The bushings 40 allow oscillations of the spring-shock absorber unit with respect to the wheel support about the axis 32A and also allow relative oscillations of these components corresponding to an inclination of the axis of the pin 52 with respect to the axis 32A.

In general, in the embodiment in which the shock absorber unit is connected to the wheel K by means of a main connecting member, for example, in the form of an elastic bushing or spherical joint, and by means of an auxiliary connecting member, for example, in the form of an elastic bushing or spherical joint, said main and auxiliary connecting members are configured in such a way as to have mechanical and elastic characteristics that are equal or different from each other, predetermined in such a way as to obtain a desired kinematic behavior of the suspension and depending on the degrees of freedom to implement.

Of course, without prejudice to the principle of the invention, the details of construction and the embodiments may vary widely with respect to those described and illustrated purely by way of example, without departing from the scope of the present invention which is disclosed in the claims.

## Claims

1. Quadrilateral-type front suspension for a steerable wheel of a motor-vehicle, comprising:
- a wheel support (K),
- an upper oscillating arm (UA), having one end articulated to the wheel support (K) by means of a first joint (6) and an opposite end articulated to the motor-vehicle structure (B) by means of at least one second joint (8, 9),
- a lower oscillating arm (LA), having one end articulated to the wheel support (K) by means of a first joint (7) and an opposite end articulated to the motor-vehicle structure by means of at least one second joint (10,11),
- a spring-shock absorber unit (18) operatively interposed between said suspension and the structure (B) of the motor-vehicle, and
- an anti-roll bar (TB) mounted on the structure (B) of the motor-vehicle along a transverse axis with respect to the longitudinal direction of the motor-vehicle, and having an end arm (27) operatively connected to said suspension,
- each of said upper and lower oscillating arms (UA, LA) being in the form of a single oscillating arm or being defined by two independent oscillating rods each articulated at one end to the wheel support and at the opposite end to the structure (B) of the motor-vehicle,
wherein the aforesaid spring-shock absorber unit (18) is operatively connected to said suspension by means of a connection to said wheel support (K),
wherein said spring-shock absorber unit (18) is connected to said wheel support (K) at a connecting point (32) lying substantially on the steering axis (14) of the wheel support (K) or adjacent to it,
wherein the spring-shock absorber unit (18) is connected to the wheel support (K) by means of an articulated joint (32;36;40), and
wherein an anti-rotation device (35; 37; 40) is associated with the connection between the spring-shock absorber unit (18) and the suspension, to prevent or limit a relative rotation between the spring-shock absorber unit (18) and the wheel support (K),
said suspension being **characterized in that** said anti-rotation device (35; 37; 40) is associated with the connection between the spring-shock absorber unit (18) and the wheel support (K),
the anti-rotation device comprising an additional element (35; 37; 40) connecting the spring-shock absorber unit (18) to the wheel support (K).

2. Suspension according to claim 1, **characterized in that** said additional connecting element connecting the wheel support (K) to the spring-shock absorber unit (18) is an articulated rod (35).

3. Suspension according to claim 1, **characterized in that** the spring-shock absorber unit (18) is connected to the wheel support (K) by means of an elastic bushing (36),
**in that** said elastic bushing (36) has an axis substantially parallel to the wheel axis, and
**in that** said additional connecting element comprises an auxiliary bushing (37) carried by the wheel support (K) and engaged by an element (34, 38) connected to the spring-shock absorber unit (18).

4. Suspension according to claim 1, **characterized in that** said articulated joint (32) and said additional connecting element are two elastic bushings (40) spaced apart and aligned on a same axis (32A) parallel to the longitudinal direction of the motor-vehicle.

5. Suspension according to claim 1, **characterized in that** said end arm (26) of the anti-roll arm (TB) is operatively connected to the suspension by means of a connection to said wheel support (K).

6. Suspension according to claim 5, **characterized in that** said end arm (26) of the anti-roll bar (TB) is connected to the wheel support (K) at a connecting point (33) lying substantially on the steering axis (14) of the wheel support (K) or adjacent to it.

7. Suspension according to claims 5 or 6, **characterized in that** said end arm (26) of the anti-roll arm (TB) is connected to the wheel support (K) by means of an articulated rod (27).

8. Suspension according to claim 1, **characterized in that** said end arm (26) of the anti-roll arm (TB) is operatively connected to the suspension by means of a connection to said spring-shock absorber unit (18).

9. Suspension according to claim 8, **characterized in that** said end arm (26) of the anti-roll arm (TB) is connected to the spring-shock absorber unit (28) by means of an articulated rod (27).

10. Suspension according to claim 7 or claim 9, **characterized in that** said articulated rod (27) for connecting the end arm (26) of the anti-roll bar (TB) extends in a direction forming an angle of less than 20° with the vertical.

11. Suspension according to claim 1, **characterized in that** said end arm (26) of the anti-roll bar (TB) is connected to the spring-shock absorber unit (18) and **in that** the spring-shock absorber unit (18) is mounted in such a way as to be free to rotate about its axis.

## Patentansprüche

1. Vierecks-Vorderradaufhängung für ein lenkbares Rad eines Kraftfahrzeugs, die umfasst:
- einen Radträger (K),
- einen oberen Schwingarm (UA), der ein Ende, das mittels eines ersten Gelenks (6) an dem Radträger (K) angelenkt ist, sowie ein gegenüberliegendes Ende hat, das mittels wenigstens eines zweiten Gelenks (8, 9) an der Kraftfahrzeugstruktur (B) angelenkt ist,
- einen unteren Schwingarm (LA), der ein Ende, das mittels eines ersten Gelenks (7) an dem Radträger (K) angelenkt ist, sowie ein gegenüberliegendes Ende hat, das mittels wenigstens eines zweiten Gelenks (10, 11) an der Kraftfahrzeugstruktur angelenkt ist,
- eine Feder-Stoßdämpfer-Einheit (18), die funktional zwischen der Aufhängung und der Struktur (B) des Kraftfahrzeugs angeordnet ist, sowie
- einen Stabilisator (TB), der an der Struktur (B) des Kraftfahrzeugs entlang einer Querachse in Bezug auf die Längsrichtung des Kraftfahrzeugs angebracht ist und der einen End-Arm (27) aufweist, der funktional mit der Aufhängung verbunden ist,
- wobei der obere und der untere Schwingarm (UA, LA) die Form eines einzelnen Schwingarms haben oder durch zwei unabhängige Schwingstangen gebildet werden, die jeweils an einem Ende an dem Radträger und an dem gegenüberliegenden Ende an der Struktur (B) des Kraftfahrzeugs angelenkt sind,
wobei die Feder-Stoßdämpfer-Einheit (18) mittels einer Verbindung mit dem Radträger (K) funktional mit der Aufhängung verbunden ist,
die Feder-Stoßdämpfer-Einheit (18) mit dem Radträger (K) an einem Verbindungspunkt (32) verbunden ist, der im Wesentlichen auf der Lenkachse (14) des Radträgers (K) liegt oder daran angrenzt,
wobei die Feder-Stoßdämpfer-Einheit (18) mittels eines Drehgelenks (32; 36; 40) mit dem Radträger (K) verbunden ist, und
eine Verdrehschutz-Vorrichtung (35; 37; 40) zu der Verbindung zwischen der Feder-Stoßdämpfer-Einheit (18) und der Aufhängung gehört und eine relative Drehung der Feder-Stoßdämpfer-Einheit (18) und des Radträgers (K) zueinander verhindert oder einschränkt,
wobei die Aufhängung **dadurch gekennzeichnet ist, dass** die Verdrehschutz-Vorrichtung (35; 37; 40) zu der Verbindung zwischen der Feder-Stoßdämpfer-Einheit (18) und dem Radträger (K) gehört,
die Verdrehschutz-Vorrichtung ein zusätzliches Element (35; 37; 40) umfasst, das die Feder-Dämpfer-Einheit (18) mit dem Radträger (K) verbindet.

2. Aufhängung nach Anspruch 1, **dadurch gekennzeichnet, dass** das zusätzliche Verbindungselement, das den Radträger (K) mit der Feder-Stoßdämpfer-Einheit (18) verbindet, eine Gelenkstange (35) ist.

3. Aufhängung nach Anspruch 1, **dadurch gekennzeichnet, dass** die Feder-Stoßdämpfer-Einheit (18) mittels einer elastischen Buchse (36) mit dem Radträger (K) verbunden ist,
dadurch, dass die elastische Buchse (36) eine Achse im Wesentlichen parallel zu der Radachse hat, und
dadurch, dass das zusätzliche Verbindungselement eine Hilfsbuchse (37) umfasst, die von dem Radträger (K) getragen wird und mit einem Element (34, 38) in Eingriff ist, das mit der Feder-Stoßdämpfer-Einheit (18) verbunden ist.

4. Aufhängung nach Anspruch 1, **dadurch gekennzeichnet, dass** das Gelenk (32) und das zusätzliche Verbindungselement zwei elastische Buchsen (40) sind, die voneinander beabstandet und auf der gleichen Achse (32A) parallel zu der Längsrichtung des Kraftfahrzeugs ausgerichtet sind.

5. Aufhängung nach Anspruch 1, **dadurch gekennzeichnet, dass** der End-Arm (26) des Stabilisators (TB) mittels einer Verbindung mit dem Radträger (K) funktional mit der Aufhängung verbunden ist.

6. Aufhängung nach Anspruch 5, **dadurch gekennzeichnet, dass** der End-Arm (26) des Stabilisators (TB) mit dem Radträger (K) an einem Verbindungspunkt (33) verbunden ist, der im Wesentlichen auf der Lenkachse (14) des Radträgers (K) liegt oder daran angrenzt.

7. Aufhängung nach den Ansprüchen 5 oder 6, **dadurch gekennzeichnet, dass** der End-Arm (26) des Stabilisators (TB) mittels einer Gelenkstange (27) mit dem Radträger (K) verbunden ist.

8. Aufhängung nach Anspruch 1, **dadurch gekennzeichnet, dass** der End-Arm (26) des Stabilisators (TB) mittels einer Verbindung mit der Feder-Stoßdämpfer-Einheit (18) funktional mit der Aufhängung verbunden ist.

9. Aufhängung nach Anspruch 8, **dadurch gekennzeichnet, dass** der End-Arm (26) des Stabilisators (TB) mittels einer Gelenkstange (27) mit der Feder-Stoßdämpfer-Einheit (28) verbunden ist.

10. Aufhängung nach Anspruch 7 oder Anspruch 9, **dadurch gekennzeichnet, dass** sich die Gelenkstange (27) zum Verbinden des End-Arms (26) des Stabilisators (TB) in einer Richtung erstreckt, die einen Winkel von weniger als 20° zu der Vertikalen bildet.

11. Aufhängung nach Anspruch 1, **dadurch gekennzeichnet, dass** der End-Arm (26) des Stabilisators (TB) mit der Feder-Stoßdämpfer-Einheit (18) verbunden ist, und dadurch, dass die Feder-Stoßdämpfer-Einheit (18) so installiert ist, dass sie sich frei um ihre Achse herum drehen kann.

## Revendications

1. Suspension avant de type quadrilatéral pour une roue orientable d'un véhicule automobile, comprenant :
- un support de roue (K),
- un bras oscillant supérieur (UA), ayant une extrémité articulée au support de roue (K) au moyen d'une première articulation (6) et une extrémité opposée articulée à la structure de véhicule automobile (B) au moyen d'au moins une deuxième articulation (8, 9),
- un bras oscillant inférieur (LA), ayant une extrémité articulée au support de roue (K) au moyen d'une première articulation (7) et une extrémité opposée articulée à la structure de véhicule automobile au moyen d'au moins une deuxième articulation (10, 11),
- une unité d'amortissement à ressort (18) interposée de manière fonctionnelle entre ladite suspension et la structure (B) du véhicule automobile, et
- une barre antiroulis (TB) montée sur la structure (B) du véhicule automobile le long d'un axe transversal par rapport à la direction longitudinale du véhicule automobile, et ayant un bras d'extrémité (27) relié de manière fonctionnelle à ladite suspension,
- chacun desdits bras oscillants supérieur et inférieur (UA, LA) se présentant sous la forme d'un seul bras oscillant ou étant défini par deux tiges oscillantes indépendantes articulées chacune au niveau d'une extrémité au support de roue et au niveau de l'extrémité opposée à la structure (B) du véhicule automobile,
dans laquelle l'unité d'amortissement à ressort (18) précitée est reliée de manière fonctionnelle à ladite suspension au moyen d'une liaison audit support de roue (K),
dans laquelle ladite unité d'amortissement à ressort (18) est reliée audit support de roue (K) au niveau d'un point de liaison (32) situé essentiellement sur l'axe de direction (14) du support de roue (K) ou adjacent à celui-ci,
dans laquelle l'unité d'amortissement à ressort (18) est reliée au support de roue (K) au moyen d'un joint articulé (32 ; 36 ; 40), et
dans laquelle un dispositif anti-rotation (35 ; 37 ; 40) est associé à la liaison entre l'unité d'amortissement à ressort (18) et la suspension, pour empêcher ou limiter une rotation relative entre l'unité d'amortissement à ressort (18) et le support de roue (K),
ladite suspension étant **caractérisée en ce que** ledit dispositif anti-rotation (35 ; 37 ; 40) est associé à la liaison entre l'unité d'amortissement à ressort (18) et le support de roue (K),
le dispositif anti-rotation comprenant un élément supplémentaire (35 ; 37 ; 40) reliant l'unité d'amortissement à ressort (18) au support de roue (K).

2. Suspension selon la revendication 1, **caractérisée en ce que** ledit élément de liaison supplémentaire reliant le support de roue (K) à l'unité d'amortissement à ressort (18) est une tige articulée (35).

3. Suspension selon la revendication 1, **caractérisée en ce que** l'unité d'amortissement à ressort (18) est reliée au support de roue (K) au moyen d'une douille élastique (36),
**en ce que** ladite douille élastique (36) a un axe essentiellement parallèle à l'axe de la roue, et
**en ce que** ledit élément de liaison supplémentaire comprend une douille auxiliaire (37) portée par le support de roue (K) et engagée par un élément (34, 38) relié à l'unité d'amortissement à ressort (18).

4. Suspension selon la revendication 1, **caractérisée en ce que** ledit joint articulé (32) et ledit élément de liaison supplémentaire sont deux douilles élastiques (40) espacées et alignées sur un même axe (32A) parallèle à la direction longitudinale du véhicule automobile.

5. Suspension selon la revendication 1, **caractérisée en ce que** ledit bras d'extrémité (26) de la barre antiroulis (TB) est relié de manière fonctionnelle à la suspension au moyen d'une liaison audit support de roue (K).

6. Suspension selon la revendication 5, **caractérisée en ce que** ledit bras d'extrémité (26) de la barre antiroulis (TB) est relié au support de roue (K) au niveau d'un point de liaison (33) situé essentiellement sur l'axe de direction (14) du support de roue (K) ou adjacent à celui-ci.

7. Suspension selon la revendication 5 ou 6, **caractérisée en ce que** ledit bras d'extrémité (26) de la barre antiroulis (TB) est relié au support de roue (K) au moyen d'une tige articulée (27).

8. Suspension selon la revendication 1, **caractérisée en ce que** ledit bras d'extrémité (26) de la barre antiroulis (TB) est relié de manière fonctionnelle à la suspension au moyen d'une liaison à ladite unité d'amortissement à ressort (18).

9. Suspension selon la revendication 8, **caractérisée en ce que** ledit bras d'extrémité (26) de la barre antiroulis (TB) est relié à l'unité d'amortissement à ressort (28) au moyen d'une tige articulée (27).

10. Suspension selon la revendication 7 ou 9, **caractérisée en ce que** ladite tige articulée (27) pour la liaison du bras d'extrémité (26) de la barre antiroulis (TB) s'étend dans une direction formant un angle inférieur à 20° avec la verticale.

11. Suspension selon la revendication 1, **caractérisée en ce que** ledit bras d'extrémité (26) de la barre antiroulis (TB) est relié à l'unité d'amortissement à ressort (18) et **en ce que** l'unité d'amortissement à ressort (18) est montée de manière à pouvoir tourner librement autour de son axe.
